(19) Europäisches Patentamt / European Patent Office / Office européen des brevets

(11) **EP 4 236 556 A1**

(12) **EUROPEAN PATENT APPLICATION**
published in accordance with Art. 153(4) EPC

(43) Date of publication:
**30.08.2023 Bulletin 2023/35**

(21) Application number: **21883200.4**

(22) Date of filing: **19.10.2021**

(51) International Patent Classification (IPC):
$H04W\ 72/12^{(2023.01)}$     $H04W\ 72/04^{(2023.01)}$
$H04W\ 72/02^{(2009.01)}$     $H04W\ 76/28^{(2018.01)}$
$H04W\ 4/40^{(2018.01)}$       $H04W\ 92/18^{(2009.01)}$

(52) Cooperative Patent Classification (CPC):
**H04W 4/40; H04W 72/02; H04W 72/04;
H04W 72/12; H04W 76/28; H04W 92/18**

(86) International application number:
**PCT/KR2021/014602**

(87) International publication number:
**WO 2022/086131 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.10.2020  KR 20200135974
07.01.2021  KR 20210001729**

(71) Applicant: **LG Electronics Inc.**
**Yeongdeungpo-gu**
**Seoul 07336 (KR)**

(72) Inventors:
• **PARK, Giwon**
  **Seoul 06772 (KR)**
• **LEE, Seungmin**
  **Seoul 06772 (KR)**
• **BACK, Seoyoung**
  **Seoul 06772 (KR)**
• **HONG, Jongwoo**
  **Seoul 06772 (KR)**

(74) Representative: **Plasseraud IP**
**66, rue de la Chaussée d'Antin**
**75440 Paris Cedex 09 (FR)**

(54) **METHOD AND DEVICE FOR ALIGNING SL DRX ACTIVE TIME IN NR V2X**

(57)     Provided are a method for performing wireless communication by a first device and a device supporting same. The method may comprise the steps of: receiving a sidelink (SL) discontinuous reception (DRX) configuration including at least one among information on an SL DRX cycle, information on an on-duration timer, information on an inactivity timer, information on a retransmission timer, and information on a hybrid automatic repeat request (HARQ) round trip time (RTT) timer; receiving, from a second device, sidelink control information (SCI) including information indicating initial transmission or retransmission; and starting a timer on the basis of the SCI, wherein the inactivity timer starts on the basis that the SCI includes information indicating the initial transmission, the retransmission timer or the HARQ RTT timer starts on the basis that the SCI includes information indicating the retransmission, and a time during which at least one of the on-duration timer, the inactivity timer, and the retransmission timer is operating is an active time.

FIG. 15

receiving SL DRX configuration including
at least one of information related to SL DRX cycle,
information related to on-duration timer,
information related to inactivity timer,
information related to retransmission timer,
or information related to HARQ RTT timer — S1510

receiving, from second device,
SCI including information representing initial
transmission or retransmission — S1520

starting timer based on SCI — S1530

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

**DISCLOSURE**

**TECHNICAL PROBLEM**

Meanwhile, if an RX UE does not receive some transmissions transmitted by a TX UE, a misalignment of the start time of SL DRX inactivity timers between the TX UE and the RX UE may occur. In this case, an error may occur in the SL DRX operation of the UE. For example, there may be a problem that the TX UE determines that the RX UE is operating in a sleep mode (because the TX UE determines that the SL DRX inactivity timer has expired) but the RX UE may operate in an active duration (because the SL DRX inactivity timer expires delayed from the time determined by the TX UE). For example, if active times are not aligned between the TX UE and the RX UE, the RX UE may unnecessarily operate in an active state in a time duration in which transmission is not performed by the TX UE, which causes unnecessary battery consumption of the RX UE. Furthermore, for example, if active times are not aligned between the TX UE and the RX UE, the RX UE may operate in a sleep state (i.e., outside of an active time) in a time duration in which transmission is performed by the TX UE. Due to this, reliability of SL communication between the TX UE and the RX UE may not be guaranteed.

**TECHNICAL SOLUTION**

In one embodiment, provided is a method for performing wireless communication by a first device. The method may comprise: receiving a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; receiving, from a second device, sidelink control information (SCI) including information representing initial transmission or retransmission; and starting a timer based on the SCI, wherein, based on that the information representing the initial transmission is included in the SCI, the inactivity timer is started, wherein, based on that the information representing the retransmission is included in the SCI, the retransmission timer or the HARQ RTT timer is started, and wherein a time during which at least one of the on-duration timer, the inactivity timer, or the retransmission timer is running is an active time.

In one embodiment, provided is a first device adapted to perform wireless communication. The first device may comprise: one or more memories storing instructions; one or more transceivers; and one or more processors connected to the one or more memories and the one or more transceivers. For example, the one or more processors may execute the instructions to: receive a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; receive, from a second device, sidelink control information (SCI) including information representing initial transmission or retransmission; and start a timer based on the SCI, wherein, based on that the information representing the initial transmission is included in the SCI, the inactivity timer is started, wherein, based on that the information representing the retransmission is included in the SCI, the retransmission timer or the HARQ RTT timer is started, and wherein a time during which at least one of the on-duration timer, the inactivity timer, or the retransmission timer is running is an active time.

## ADVANTAGEOUS EFFECTS

The UE can efficiently perform SL communication.

## BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a resource unit for CBR measurement based on an embodiment of the present disclosure.
FIG. 9 shows a problem that SL DRX inactivity timers are not aligned between the TX UE and the RX UE.
FIG. 10 shows an example of the start time of a timer, in order to solve the misalignment of the start time of timers between the TX UE and the RX UE, based on an embodiment of the present disclosure.
FIG. 11 shows an example of the start time of a timer, in order to solve the misalignment of the start time of timers between the TX UE and the RX UE, based on an embodiment of the present disclosure.
FIG. 12 shows an example of the start time of a timer, in order to solve the misalignment of the start time of timers between the TX UE and the RX UE, based on an embodiment of the present disclosure.
FIG. 13 shows a procedure for solving the misalignment of the start time of timers between the TX UE and the RX UE, based on an embodiment of the present disclosure.
FIG. 14 shows an example of the start time of a timer, based on an embodiment of the present disclosure.
FIG. 15 shows a method for performing wireless communication by a first device, based on an embodiment of the present disclosure.
FIG. 16 shows a method for performing wireless communication by a second device, based on an embodiment of the present disclosure.
FIG. 17 shows a communication system 1, based on an embodiment of the present disclosure.
FIG. 18 shows wireless devices, based on an embodiment of the present disclosure.
FIG. 19 shows a signal process circuit for a transmission signal, based on an embodiment of the present disclosure.
FIG. 20 shows another example of a wireless device, based on an embodiment of the present disclosure.
FIG. 21 shows a hand-held device, based on an embodiment of the present disclosure.
FIG. 22 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11

(Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in the present disclosure, reference may be made to a wireless communication standard document published before the present disclosure is filed. For example, the documents in Table 1 below may be referred to.

[Table 1]

| 3GPP LTE | 3GPP NR (e.g. 5G) |
|---|---|
| - 3GPP TS 36.211: Physical channels and modulation | - 3GPP TS 38.211: Physical channels and modulation |
| - 3GPP TS 36.212: Multiplexing and channel coding | - 3GPP TS 38.212: Multiplexing and channel coding |
| - 3GPP TS 36.213: Physical layer procedures | - 3GPP TS 38.213: Physical layer procedures for control |
| - 3GPP TS 36.214: Physical layer; Measurements | - 3GPP TS 38.214: Physical layer procedures for data |
| - 3GPP TS 36.300: Overall description | |
| - 3GPP TS 36.304: User Equipment (UE) procedures in idle mode | - 3GPP TS 38.215: Physical layer measurements |
| - 3GPP TS 36.314: Layer 2 - Measurements | - 3GPP TS 38.300: Overall description |
| - 3GPP TS 36.321: Medium Access Control (MAC) protocol | - 3GPP TS 38.304: User Equipment (UE) procedures in idle mode and in RRC inactive state |
| - 3GPP TS 36.322: Radio Link Control (RLC) protocol | - 3GPP TS 38.321: Medium Access Control (MAC) protocol |
| - 3GPP TS 36.323: Packet Data Convergence Protocol (PDCP) | - 3GPP TS 38.322: Radio Link Control (RLC) protocol |
| - 3GPP TS 36.331: Radio Resource Control (RRC) protocol | - 3GPP TS 38.323: Packet Data Convergence Protocol (PDCP) |
| | - 3GPP TS 38.331: Radio Resource Control (RRC) protocol |
| | - 3GPP TS 37.324: Service Data Adaptation Protocol (SDAP) |

(continued)

| 3GPP LTE | 3GPP NR (e.g. 5G) |
|---|---|
| | - 3GPP TS 37.340: Multi-connectivity; Overall description |

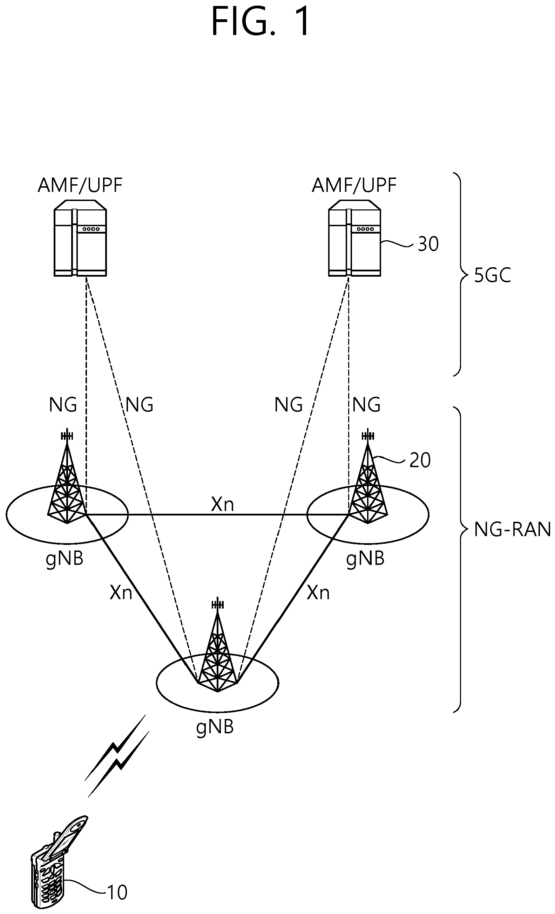

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

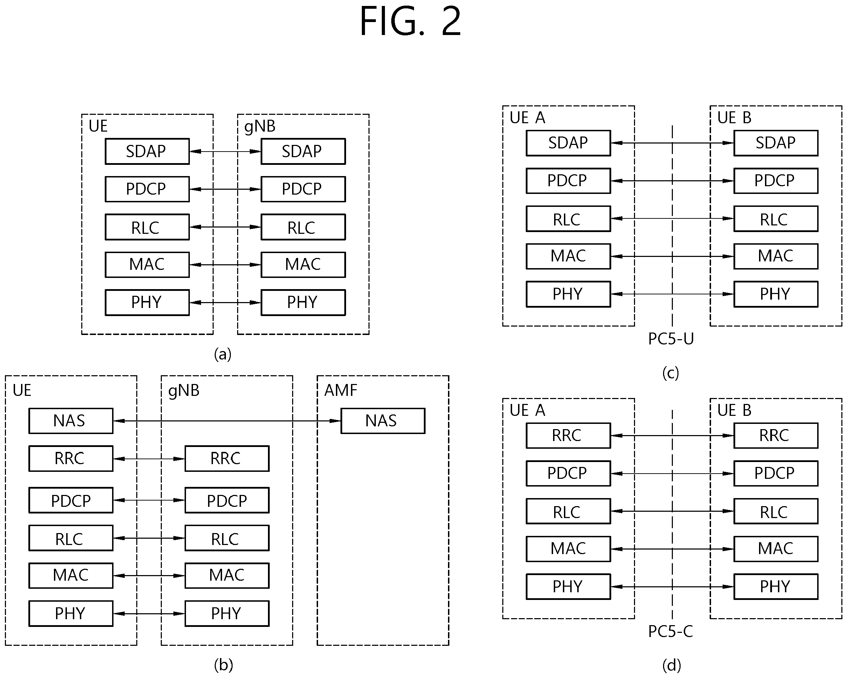

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

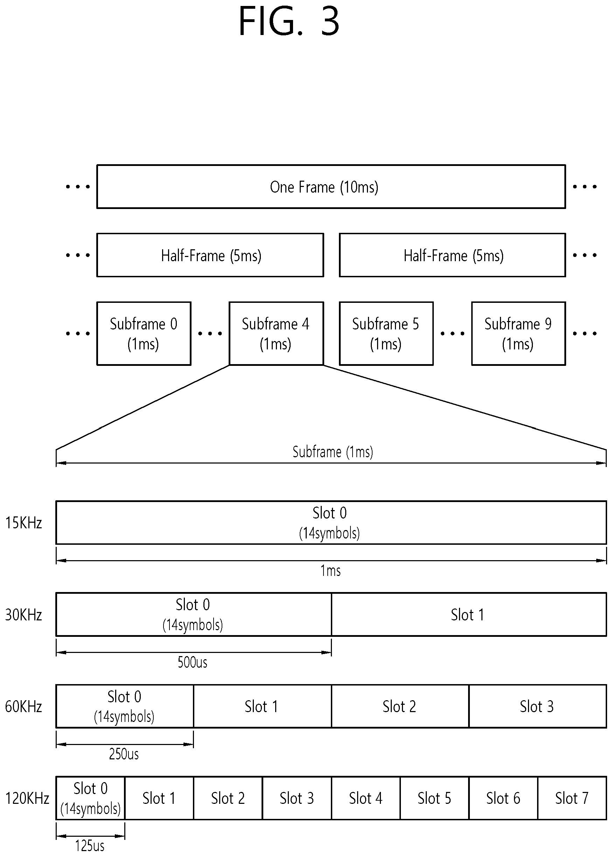

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 3 shows an example of a number of symbols per slot, a number of slots per frame, and a number of slots per subframe based on the SCS, in a case where an extended CP is used.

[Table 3]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 4. Among the frequency ranges that are used in an NR system, FR1 may mean a "sub 6GHz range", and FR2 may mean an "above 6GHz range" and may also be referred to as a millimeter wave (mmW).

[Table 4]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 5, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 5]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

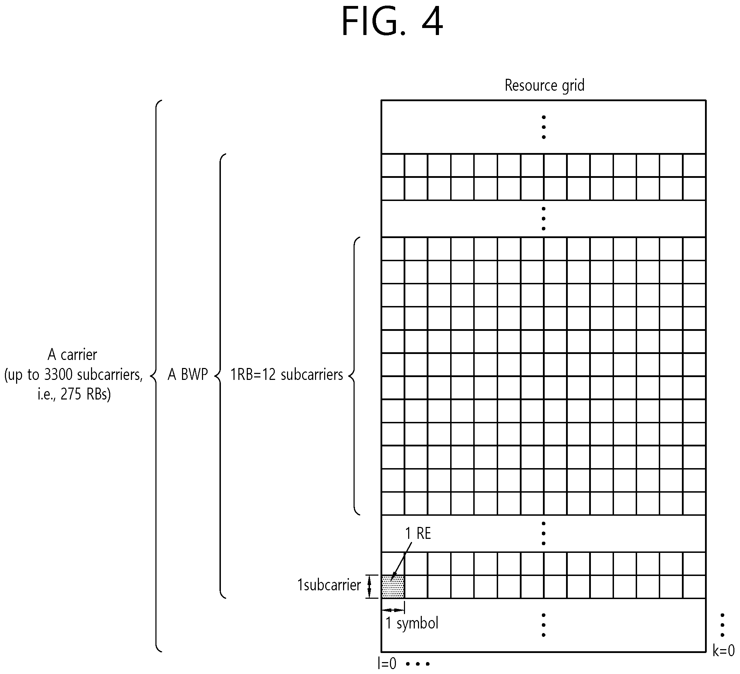

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

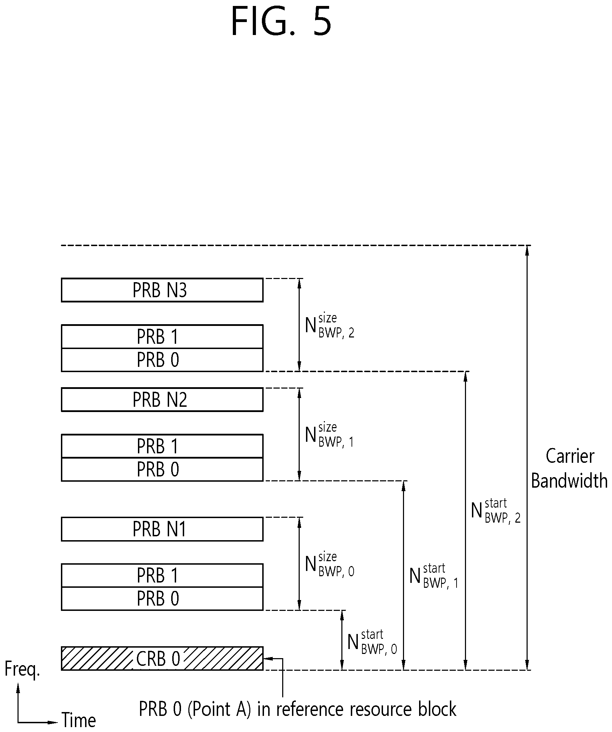

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

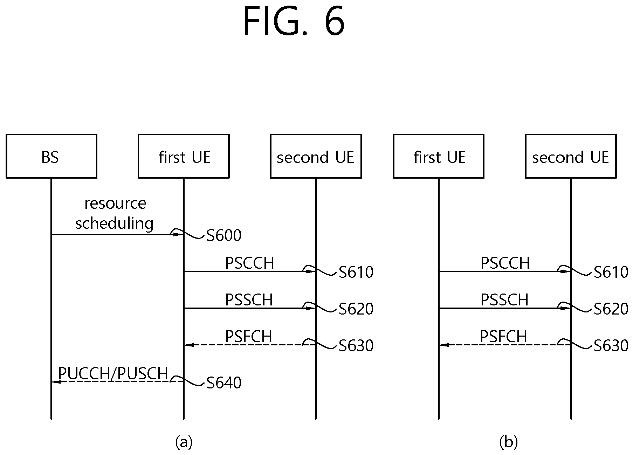

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Table 6 shows an example of a DCI format.

[Table 6]

| |
|---|
| 7.3.1.4.1 Format 3_0 |
| DCI format 3_0 is used for scheduling of NR PSCCH and NR PSSCH in one cell. |
| The following information is transmitted by means of the DCI format 3_0 with CRC scrambled by SL-RNTI or SL-CS-RNTI:<br><br>- Resource pool index - $\lceil \log_2 I \rceil$ bits , where $I$ is the number of resource pools for transmission configured by the higher layer parameter *sl-TxPoolScheduling.*<br>- Time gap - 3 bits determined by higher layer parameter *sl-DCI-ToSL-Trans,* as defined in clause 8.1.2.1 of [6, TS 38.214]<br>- HARQ process number - 4 bits as defined in clause 16.4 of [5, TS 38.213]<br>- New data indicator - 1 bit as defined in clause 16.4 of [5, TS 38.213]<br>- Lowest index of the subchannel allocation to the initial transmission - $\lceil \log_2(N^{\mathrm{SL}}_{\mathrm{subChannel}}) \rceil$ bits as defined in clause 8.1.2.2 of [6, TS 38.214]<br>- SCI format 1-A fields according to clause 8.3.1.1:<br>    - Frequency resource assignment.<br>    - Time resource assignment.<br>- PSFCH-to-HARQ feedback timing indicator - $\lceil \log_2 N_{\mathrm{fb\_timing}} \rceil$ bits , where $N_{\mathrm{fb\_timing}}$ is the number of entries in the higher layer parameter *sl-PSFCH-ToPUCCH* as defined in clause 16.5 of [5, TS 38.213]<br>- PUCCH resource indicator - 3 bits as defined in clause 16.5 of [5, TS 38.213].<br>- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.<br>- Counter sidelink assignment index - 2 bits<br>    - 2 bits as defined in clause 16.5.2 of [5, TS 38.213] if the UE is configured with *pdsch-HARQ-ACK-Codebook = dynamic*<br>    - 2 bits as defined in clause 16.5.1 of [5, TS 38.213] if the UE is configured with *pdsch-HARQ-ACK-Codebook = semi-static*<br>- Padding bits, if required |
| For a PSSCH transmission by a UE that is scheduled by a DCI format, or for a SL configured grant Type 2 PSSCH transmission activated by a DCI format, the DCI format indicates to the UE that a PUCCH resource is not provided when a value of the PUCCH resource indicator field is zero and a value of PSFCH-to-HARQ feedback timing indicator field, if present, is zero. For a SL configured grant Type 1 PSSCH transmission, a PUCCH resource can be provided by *sl-N1PUCCH-AN-r16* and *sl-PSFCH-ToPUCCH-CG-Type1-r16.* If a PUCCH resource is not provided, the UE does not transmit a PUCCH with generated HARQ-ACK information from PSFCH reception occasions. |

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Table 7 shows an example of the 1st-stage SCI format.

[Table 7]

| |
|---|
| 8.3.1.1 SCI format 1-A<br>SCI format 1-A is used for the scheduling of PSSCH and 2nd-stage-SCI on PSSCH<br>The following information is transmitted by means of the SCI format 1-A:<br>    - Priority - 3 bits as specified in clause 5.4.3.3 of [12, TS 23.287] and clause 5.22.1.3.1 of [8, TS 38.321].<br>    - Frequency resource assignment - $\left\lceil \log_2(\frac{N_{\text{subChannel}}^{\text{SL}}(N_{\text{subChannel}}^{\text{SL}} + 1)}{2}) \right\rceil$ bits when the value of the higher layer parameter *sl-MaxNumPerReserve* is configured to 2; otherwise $\left\lceil \log_2(\frac{N_{\text{subChannel}}^{\text{SL}}(N_{\text{subChannel}}^{\text{SL}} + 1)(2N_{\text{subChannel}}^{\text{SL}} + 1)}{6}) \right\rceil$ bits when the value of the higher layer parameter *sl-MaxNumPerReserve* is configured to 3, as defined in clause 8.1.2.2 of [6, TS 38.214].<br>    - Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.2.1 of [6, TS 38.214].<br>    - Resource reservation period - $\left\lceil \log_2 N_{\text{rsv\_period}} \right\rceil$ bits as defined in clause 8.1.4 of [6, TS 38.214], where $N_{\text{rsv\_period}}$ is the number of entries in the higher layer parameter *sl-ResourceReservePeriodList*, if higher layer parameter *sl-MultiReserveResource* is configured; 0 bit otherwise.<br>    - DMRS pattern - $\left\lceil \log_2 N_{\text{pattern}} \right\rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList*.<br>    - 2nd-stage SCI format - 2 bits as defined in Table 8.3.1.1-1.<br>    - Beta_offset indicator - 2 bits as provided by higher layer parameter *sl-BetaOffsets2ndSCI* and Table 8.3.1.1-2.<br>    - Number of DMRS port - 1 bit as defined in Table 8.3.1.1-3.<br>    - Modulation and coding scheme - 5 bits as defined in clause 8.1.3 of [6, TS 38.214].<br>    - Additional MCS table indicator - as defined in clause 8.1.3.1 of [6, TS 38.214]: 1 bit if one MCS table is configured by higher layer parameter *sl-Additional-MCS-Table*; 2 bits if two MCS tables are configured by higher layer parameter *si- Additional-MCS-Table*; 0 bit otherwise.<br>    - PSFCH overhead indication - 1 bit as defined clause 8.1.3.2 of [6, TS 38.214] if higher layer parameter *sl-PSFCH-Period* = 2 or 4; 0 bit otherwise. |

(continued)

| |
|---|
| 8.3.1.1 SCI format 1-A<br>    - Reserved - a number of bits as determined by higher layer parameter *sl-NumReservedBits,* with value set to zero. |

Table 8 shows an example of the 2nd-stage SCI format.

[Table 8]

8.4.1.1 SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number – 4 bits as defined in clause 16.4 of [5, TS 38.213].
- New data indicator – 1 bit as defined in clause 16.4 of [5, TS 38.213].
- Redundancy version – 2 bits as defined in clause 16.4 of [6, TS 38.214].
- Source ID – 8 bits as defined in clause 8.1 of [6, TS 38.214].
- Destination ID – 16 bits as defined in clause 8.1 of [6, TS 38.214].
- HARQ feedback enabled/disabled indicator – 1 bit as defined in clause 16.3 of [5, TS 38.213].
- Cast type indicator – 2 bits as defined in Table 8.4.1.1-1.
- CSI request – 1 bit as defined in clause 8.2.1 of [6, TS 38.214].

<table>
<tr><th colspan="2">Table 8.4.1.1-1: Cast type indicator</th></tr>
<tr><th>Value of Cast type indicator</th><th>Cast type</th></tr>
<tr><td>00</td><td>Broadcast</td></tr>
<tr><td>01</td><td>Groupcast<br>when HARQ-ACK information includes ACK or NACK</td></tr>
<tr><td>10</td><td>Unicast</td></tr>
<tr><td>11</td><td>Groupcast<br>when HARQ-ACK information includes only NACK</td></tr>
</table>

8.4.1.2 SCI format 2-B

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number – 4 bits as defined in clause 16.4 of [5, TS 38.213].
- New data indicator – 1 bit as defined in clause 16.4 of [5, TS 38.213].
- Redundancy version – 2 bits as defined in clause 16.4 of [6, TS 38.214].
- Source ID – 8 bits as defined in clause 8.1 of [6, TS 38.214].
- Destination ID – 16 bits as defined in clause 8.1 of [6, TS 38.214].
- HARQ feedback enabled/disabled indicator – 1 bit as defined in clause 16.3 of [5, TS 38.213].
- Zone ID – 12 bits as defined in clause 5.8.11 of [9, TS 38.331].
- Communication range requirement – 4 bits determined by higher layer parameter *sl-ZoneConfigMCR-Index.*

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

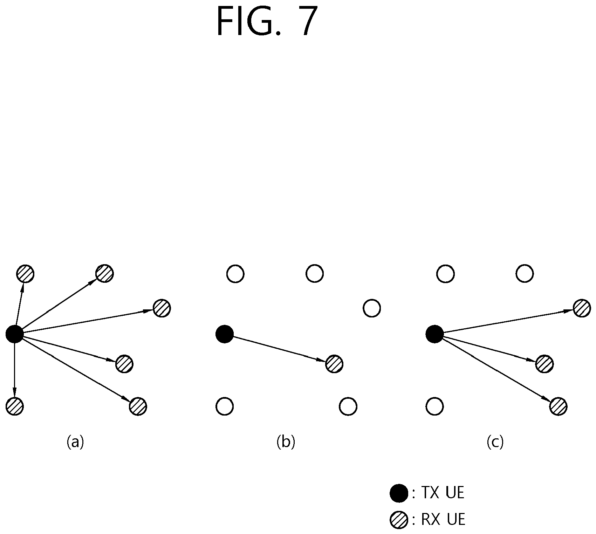

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, sidelink (SL) congestion control will be described.

For example, the UE may determine whether energy measured in a unit time/frequency resource is greater than or equal to a specific level, and may adjust an amount and frequency of use for its transmission resource based on a ratio of the unit time/frequency resource in which the energy greater than or equal to the specific level is observed. In the present disclosure, the ratio of the time/frequency resource in which the energy greater than or equal to the specific level is observed may be defined as a channel busy ratio (CBR). The UE may measure the CBR for a channel/frequency. Additionally, the UE may transmit the measured CBR to the network/BS.

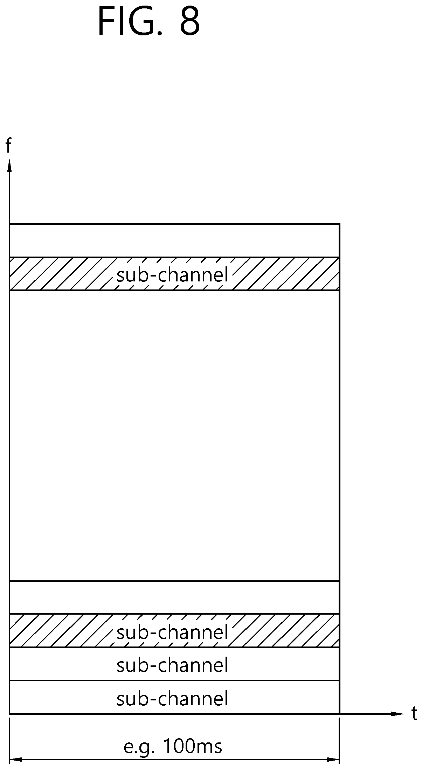

FIG. 8 shows a resource unit for CBR measurement based on an embodiment of the present disclosure. The embodiment of FIG. 8 may be combined with various embodiments of the present disclosure.

Referring to FIG. 8, CBR may denote the number of sub-channels in which a measurement result value of a received signal strength indicator (RSSI) has a value greater than or equal to a pre-configured threshold as a result of measuring the RSSI by a UE on a subchannel basis for a specific period (e.g., 100 ms). Alternatively, the CBR may denote a ratio of sub-channels having a value greater than or equal to a pre-configured threshold among sub-channels for a specific duration. For example, in the embodiment of FIG. 8, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the BS.

For example, if a PSCCH and a PSSCH are multiplexed, the UE may perform one CBR measurement for one resource pool. Herein, if a PSFCH resource is configured or pre-configured, the PSFCH resource may be excluded in the CBR measurement.

Further, congestion control considering a priority of traffic (e.g. packet) may be necessary. To this end, for example, the UE may measure a channel occupancy ratio (CR). Specifically, the UE may measure the CBR, and the UE may determine a maximum value $CRlimit_k$ of a channel occupancy ratio k ($CR_k$) that can be occupied by traffic corresponding to each priority (e.g., k) based on the CBR. For example, the UE may derive the maximum value $CRlimit_k$ of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 9 shows an example of SL CBR and SL RSSI.

[Table 9]

| SLCBR | |
|---|---|
| Definition | SL Channel Busy Ratio (SL CBR) measured in slot *n* is defined as the portion of sub-channels in the resource pool whose SL RSSI measured by the UE exceed a (pre-)configured threshold sensed over a CBR measurement window [*n*-a, *n*-1], wherein a is equal to 100 or 100·$2^\mu$ slots, according to higher layer parameter *time WindowSize-CBR.* |
| Applicable for | RRC_IDLE intra-frequency, <br><br> RRC_IDLE inter-frequency, <br> RRC_CONNECTED intra-frequency, <br> RRC CONNECTED inter-frequency |
| **SL RSSI** | |
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2$^{nd}$ OFDM symbol. <br> For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, <br><br> RRC_IDLE inter-frequency, <br> RRC_CONNECTED intra-frequency, <br> RRC_CONNECTED inter-frequency |

Referring to Table 9, the slot index may be based on a physical slot index.

Table 10 shows an example of SL Channel Occupancy Ratio (CR).

[Table 10]

| Definition | Sidelink Channel Occupancy Ratio (SL CR) evaluated at slot *n* is defined as the total number of sub-channels used for its transmissions in slots [*n-a*, *n-1*] and granted in slots [*n*, *n+b*] divided by the total number of configured sub-channels in the transmission pool over [*n-a*, *n+b*]. |
|---|---|
| Applicable for | RRC_IDLE intra-frequency, <br> RRC_IDLE inter-frequency, <br> RRC_CONNECTED intra-frequency, <br> RRC_CONNECTED inter-frequency |

NOTE 1: a is a positive integer and b is 0 or a positive integer; a and b are determined by UE implementation with a+b+1 = 1000 or 1000·2μ slots, according to higher layer parameter sl-TimeWindowSizeCR, b < (a+b+1)/2, and n+b shall not exceed the last transmission

opportunity of the grant for the current transmission.

NOTE 2: SL CR is evaluated for each (re)transmission.

NOTE 3: In evaluating SL CR, the UE shall assume the transmission parameter used at slot n is reused according to the existing grant(s) in slot [n+1, n+b] without packet dropping.

NOTE 4: The slot index is based on physical slot index.

NOTE 5: SL CR can be computed per priority level

NOTE 6: A resource is considered granted if it is a member of a selected sidelink grant as defined in TS 38.321 [7].

Referring to the standard document, some procedures and technical specifications related to the present disclosure are as follows. The UE may perform a DRX operation based on Tables 11 to 13. The operations/procedures described in Tables 11 to 13 may be combined with various embodiments of the present disclosure.

[Table 11]

| |
|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. |

| NOTE 1: | If Sidelink resource allocation mode 1 is configured by RRC, a DRX functionality is not configured. |
|---|---|

RRC controls DRX operation by configuring the following parameters:

- *drx-onDurationTimer*: the duration at the beginning of a DRX cycle;
- *drx-SlotOffset*: the delay before starting the *drx-onDurationTimer*;
- *drx-InactivityTimer*: the duration after the PDCCH occasion in which a PDCCH indicates a new UL or DL transmission for the MAC entity;
- *drx-RetransmissionTimerDL* (per DL HARQ process except for the broadcast process): the maximum duration until a DL retransmission is received;
- *drx-RetransmissionTimerUL* (per UL HARQ process): the maximum duration until a grant for UL retransmission is received;
- *drx-LongCycleStartOffset*: the Long DRX cycle and *drx-StartOffset* which defines the subframe where the Long and Short DRX cycle starts;
- *drx-ShortCycle* (optional): the Short DRX cycle;
- *drx-ShortCycleTimer* (optional): the duration the UE shall follow the Short DRX cycle;
- *drx-HARQ-RTT-TimerDL* (per DL HARQ process except for the broadcast process): the minimum duration before a DL assignment for HARQ retransmission is expected by the MAC entity;
- *drx-HARQ-RTT-TimerUL* (per UL HARQ process): the minimum duration before a UL HARQ retransmission grant is expected by the MAC entity;
- *ps-Wakeup* (optional): the configuration to start associated *drx-onDurationTimer* in case DCP is monitored but not detected;
- *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started;

(continued)

| |
|---|
| - *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started. |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer, drx-InactivityTimer.* The DRX parameters that are common to the DRX groups are: *drx-SlotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL,* and *drx-HARQ-RTT-TimerUL.* |
| When a DRX cycle is configured, the Active Time for Serving Cells in a DRX group includes the time while: |
| - *drx-onDurationTimer* or *drx-InactivityTimer* configured for the DRX group is running; or |
| - *drx-RetransmissionTimerDL* or *drx-RetransmissionTimerUL* is running on any Serving Cell in the DRX group; or |
| - *ra-ContentionResolutionTimer* (as described in clause 5.1.5) or *msgB-ResponseWindow* (as described in clause 5.1.4a) is running; or |
| - a Scheduling Request is sent on PUCCH and is pending (as described in clause 5.4.4); or |
| - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a). |

[Table 12]

| |
|---|
| When DRX is configured, the MAC entity shall: |
| 1> if a MAC PDU is received in a configured downlink assignment: |
|     2>     start the *drx-HARQ-RTT-TimerDL* for the corresponding HARQ process in the first symbol after the end of the corresponding transmission carrying the DL HARQ feedback; |
|     2> stop the *drx-RetransmissionTimerDL* for the corresponding HARQ process. |
| 1>     if a MAC PDU is transmitted in a configured uplink grant and LBT failure indication is not received from lower layers: |
|     2>     start the *drx-HARQ-RTT-TimerUL* for the corresponding HARQ process in the first symbol after the end of the first repetition of the corresponding PUSCH transmission; |
|     2> stop the *drx-RetransmissionTimerUL* for the corresponding HARQ process. |
| 1> if a *drx-HARQ-RTT-TimerDL* expires: |
|     2> if the data of the corresponding HARQ process was not successfully decoded: |
|         3>     start the *drx-RetransmissionTimerDL* for the corresponding HARQ process in the first symbol after the expiry of *drx-HARQ-RTT-TimerDL.* |
| 1> if a *drx-HARQ-RTT-TimerUL* expires: |
|     2>     start the *drx-RetransmissionTimerUL* for the corresponding HARQ process in the first symbol after the expiry of *drx-HARQ-RTT-TimerUL.* |
| 1> if a DRX Command MAC CE or a Long DRX Command MAC CE is received: |

(continued)

| | |
|---|---|
| 2> stop *drx-onDurationTimer* for each DRX group; | |
| 2> stop *drx-InactivityTimer* for each DRX group. | |
| 1> if *drx-InactivityTimer* for a DRX group expires: | |
|     2> if the Short DRX cycle is configured: | |
|         3> start or restart *drx-ShortCycleTimer* for this DRX group in the first symbol after the expiry of *drx-InactivityTimer*; | |
|         3> use the Short DRX cycle for this DRX group. | |
|     2> else: | |
|         3> use the Long DRX cycle for this DRX group. | |
| 1> if a DRX Command MAC CE is received: | |
|     2> if the Short DRX cycle is configured: | |
|         3> start or restart *drx-ShortCycleTimer* for each DRX group in the first symbol after the end of DRX Command MAC CE reception; | |
|         3> use the Short DRX cycle for each DRX group. | |
|     2> else: | |
|         3> use the Long DRX cycle for each DRX group. | |
| 1> if *drx-ShortCycleTimer* for a DRX group expires: | |
|     2> use the Long DRX cycle for this DRX group. | |
| 1> if a Long DRX Command MAC CE is received: | |
|     2> stop *drx-ShortCycleTimer* for each DRX group; | |
|     2> use the Long DRX cycle for each DRX group. | |
| 1> if the Short DRX cycle is used for a DRX group, and [(SFN × 10) + subframe number] modulo (*drx-ShortCycle*) = (*drx-StartOffset*) modulo (*drx-ShortCycle*): | |
|     2> start *drx-onDurationTimer* for this DRX group after *drx-SlotOffset* from the beginning of the subframe. | |
| 1> if the Long DRX cycle is used for this DRX group, and [(SFN × 10) + subframe number] modulo (*drx-LongCycle*) = *drx-StartOffset*: | |
|     2> if DCP monitoring is configured for the active DL BWP as specified in TS 38.213 [6], clause 10.3: | |
|         3> if DCP indication associated with the current DRX cycle received from lower layer indicated to start *drx-onDurationTimer,* as specified in TS 38.213 [6]; or | |
|         3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by *recoverySearchSpaceId* of the SpCell identified by the C-RNTI while the *ra-ResponseWindow* is running (as specified in clause 5.1.4); or | |
|         3> if *ps-Wakeup* is configured with value *true* and DCP indication associated with the current DRX cycle has not been received from lower layers: | |
|             4> start *drx-onDurationTimer* after *drx-SlotOffset* from the beginning of the subframe. | |
|     2> else: | |
|         3> start *drx-onDurationTimer* for this DRX group after *drx-SlotOffset* from the beginning of the subframe. | |
| NOTE 2: | In case of unaligned SFN across carriers in a cell group, the SFN of the SpCell is used to calculate the DRX duration. |

[Table 13]

| |
| --- |
| 1> if a DRX group is in Active Time:<br>    2> monitor the PDCCH on the Serving Cells in this DRX group as specified in TS 38.213 [6];<br>    2> if the PDCCH indicates a DL transmission:<br>        3> start the *drx-HARQ-RIT-TimerDL* for the corresponding HARQ process in the first symbol after the end of the corresponding transmission carrying the DL HARQ feedback;<br>    NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback.<br>        3> stop the *drx-RetransmissionTimerDL* for the corresponding HARQ process.<br>        3> if the PDSCH-to-HARQ_feedback timing indicate a non-numerical k1 value as specified in TS 38.213 [6]:<br>            4> start the *drx-RetransmissionTimerDL* in the first symbol after the PDSCH transmission for the corresponding HARQ process.<br>    2> if the PDCCH indicates a UL transmission:<br>        3> start the *drx-HARQ-RTT-TimerUL* for the corresponding HARQ process in the first symbol after the end of the first repetition of the corresponding PUSCH transmission;<br>        3> stop the *drx-RetransmissionTimerUL* for the corresponding HARQ process.<br>    2> if the PDCCH indicates a new transmission (DL or UL) on a Serving Cell in this DRX group:<br>        3> start or restart *drx-InactivityTimer* for this DRX group in the first symbol after the end of the PDCCH reception.<br>    2> if a HARQ process receives downlink feedback information and acknowledgement is indicated:<br>        3> stop the *drx-RetransmissionTimerUL* for the corresponding HARQ process.<br>1> if DCP monitoring is configured for the active DL BWP as specified in TS 38.213 [6], clause 10.3; and<br>1> if the current symbol n occurs within *drx-onDurationTimer* duration; and<br>1> if *drx-onDurationTimer* associated with the current DRX cycle is not started as specified in this clause:<br>    2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause:<br>        3> not transmit periodic SRS and semi-persistent SRS defined in TS 38.214 [7];<br>        3> not report semi-persistent CSI configured on PUSCH;<br>        3> if *ps-TransmitPeriodicL1-RSRP* is not configured with value *true:*<br>            4> not report periodic CSI that is L1-RSRP on PUCCH.<br>        3> if *ps-TransmitOtherPeriodicCSI* is not configured with value *true*:<br>            4> not report periodic CSI that is not L1-RSRP on PUCCH.<br>1> else:<br>    2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause:<br>        3> not transmit periodic SRS and semi-persistent SRS defined in TS 38.214 [7] in this DRX group;<br>        3> not report CSI on PUCCH and semi-persistent CSI configured on PUSCH in this DRX group.<br>    2> if CSI masking (*csi-Mask*) is setup by upper layers: |

(continued)

| | | |
|---|---|---|
| | 3> | in current symbol n, if *drx-onDurationTimer* of a DRX group would not be running considering grants/assignments scheduled on Serving Cell (s) in this DRX group and DRX Command MAC CE/Long DRX Command MAC CE received until 4 ms prior to symbol n when evaluating all DRX Active Time conditions as specified in this clause; and |
| | | 4> not report CSI on PUCCH in this DRX group. |
| | NOTE 4: | If a UE multiplexes a CSI configured on PUCCH with other overlapping UCI(s) according to the procedure specified in TS 38.213 [6] clause 9.2.5 and this CSI multiplexed with other UCI (s) would be reported on a PUCCH resource outside DRX Active Time of the DRX group in which this PUCCH is configured, it is up to UE implementation whether to report this CSI multiplexed with other UCI(s). |
| Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected. | | |
| The MAC entity needs not to monitor the PDCCH if it is not a complete PDCCH occasion (e.g. the Active Time starts or ends in the middle of a PDCCH occasion). | | |

Meanwhile, an SL DRX operation may be newly supported in SL communication. Based on various embodiments of the present disclosure, a method for a UE to perform an SL DRX operation and an NR resource allocation mode 2 operation based on a timer (e.g., sidelink DRX inactivity timer) related to an SL DRX active time, and a device supporting the same are proposed. In various embodiments of the present disclosure, if an RX UE receives a newly transmitted transport block (TB) (e.g., PSCCH or PSSCH), the RX UE may start an SL DRX inactivity timer.

Meanwhile, in the NR SL mode 2 operation, in relation to a new TB or a retransmission TB to be transmitted to the RX UE, a TX UE may indicate a plurality of resources to the RX UE through a PSCCH (e.g., SCI), and the TX UE may perform SL transmission by using the indicated plurality of resources.

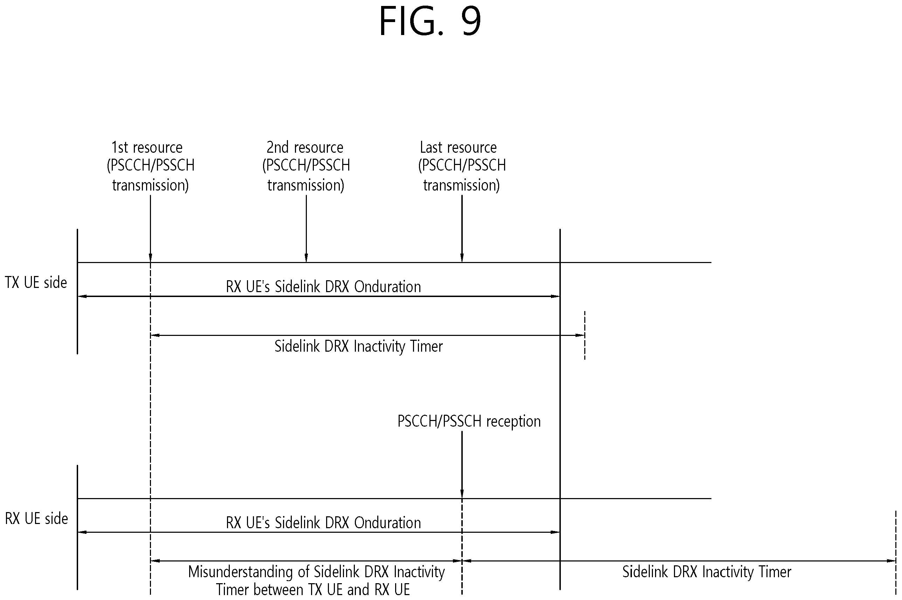

FIG. 9 shows a problem that SL DRX inactivity timers are not aligned between the TX UE and the RX UE. The embodiment of FIG. 9 may be combined with various embodiments of the present disclosure.

Referring to FIG. 9, the TX UE may perform transmission (e.g., PSCCH/PSSCH transmission) for a new TB by using the 1st resource, the 2nd resource, and the 3rd resource. Specifically, for example, the TX UE may transmit a new TB by using the 1st resource, and the TX UE may retransmit a new TB by using the 2nd resource or the 3rd resource. In this case, the TX UE may consider that the RX UE started an SL DRX inactivity timer at the time of the 1st resource. On the other hand, if the RX UE does not receive the 1st transmission and the 2nd transmission transmitted by the TX UE and successfully receives the last transmission, the RX UE may start an SL DRX inactivity timer in a time domain of the resource for the last transmission (or the time when the last transmission is received or the time of PSFCH transmission for reception of the last transmission). In this case, as in the embodiment of FIG. 9, a misalignment of the start time of SL DRX inactivity timers between the TX UE and the RX UE may occur. In this case, an error may occur in the SL DRX operation of the UE. For example, there may be a problem that the TX UE determines that the RX UE is operating in a sleep mode (because the TX UE determines that the SL DRX inactivity timer has expired) but the RX UE may operate in an active duration (because the SL DRX inactivity timer expires delayed from the time determined by the TX UE). For example, if active times are not aligned between the TX UE and the RX UE, the RX UE may unnecessarily operate in an active state in a time duration in which transmission is not performed by the TX UE, which causes unnecessary battery consumption of the RX UE. Furthermore, for example, if active times are not aligned between the TX UE and the RX UE, the RX UE may operate in a sleep state (i.e., outside of an active time) in a time duration in which transmission is performed by the TX UE. Due to this, reliability of SL communication between the TX UE and the RX UE may not be guaranteed.

The present disclosure proposes a method for solving the misalignment of the start time of SL DRX inactivity timers between the TX UE and the RX UE mentioned in the above problem and a device supporting the same.

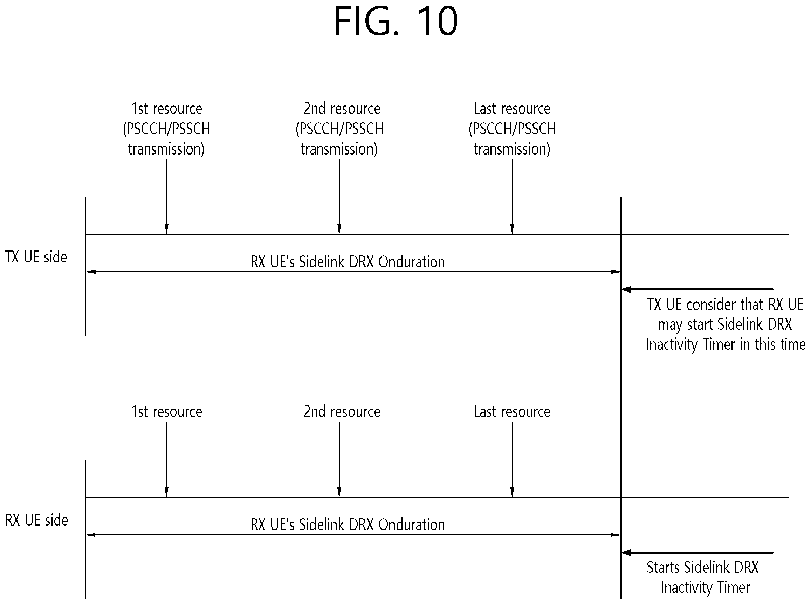

FIG. 10 shows an example of the start time of a timer, in order to solve the misalignment of the start time of timers between the TX UE and the RX UE, based on an embodiment of the present disclosure. The embodiment of FIG. 10 may be combined with various embodiments of the present disclosure.

Referring to FIG. 10, the RX UE may start an SL DRX inactivity timer at the expiration time of an SL DRX on-duration timer of the RX UE. The TX UE may also determine/consider/assume that the RX UE has started the SL DRX inactivity timer at the expiration time of the SL DRX on-duration timer of the RX UE.

Alternatively, for example, the RX UE may start an SL DRX inactivity timer at the start time of an SL DRX on-duration timer of the RX UE. The TX UE may also determine/consider/assume that the RX UE has started the SL DRX inactivity timer at the start time of the SL DRX on-duration timer of the RX UE.

In the present disclosure, for example, the start time of the timer may be replaced with a predetermined time after the start time of the timer or a predetermined time before the expiration time of the timer. For example, the predetermined time may be a pre-configured value or a value indicated by a higher layer/physical layer signal.

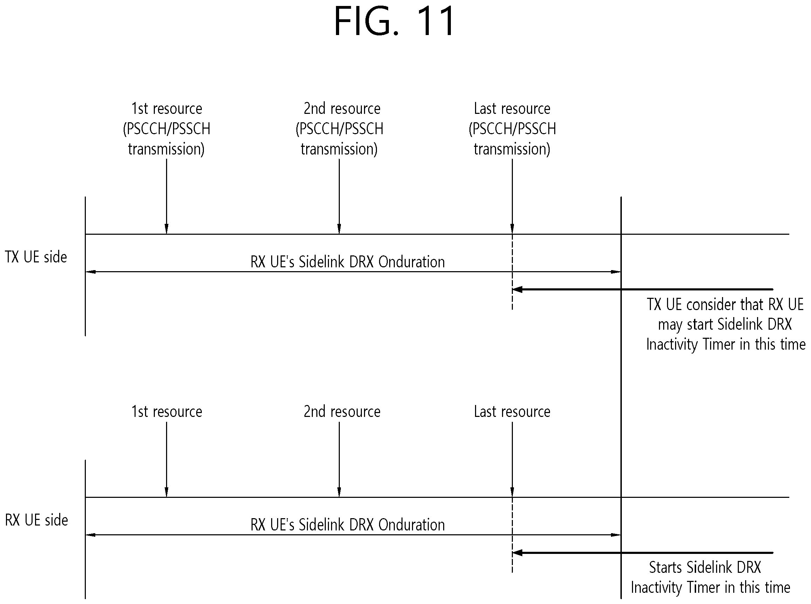

FIG. 11 shows an example of the start time of a timer, in order to solve the misalignment of the start time of timers between the TX UE and the RX UE, based on an embodiment of the present disclosure. The embodiment of FIG. 11 may be combined with various embodiments of the present disclosure.

Referring to FIG. 11, the RX UE may start an SL DRX inactivity timer in the time domain of the last resource reserved through SCI by the TX UE (or the time when the last transmission is received or the time of PSFCH transmission for reception of the last transmission) within an SL DRX on-duration domain of the RX UE. The TX UE may also determine/consider/assume that the RX UE has started the SL DRX inactivity timer in the time domain of the last resource reserved through SCI by the TX UE (or the last transmission time) within the SL DRX on-duration domain of the RX UE.

Alternatively, for example, the RX UE may start an SL DRX inactivity timer in the time domain of the first resource reserved through SCI by the TX UE (or the time when the first transmission is received or the time of PSFCH transmission for reception of the first transmission) within an SL DRX on-duration domain of the RX UE. The TX UE may also determine/consider/assume that the RX UE has started the SL DRX inactivity timer in the time domain of the first resource reserved through SCI by the TX UE (or the first transmission time) within the SL DRX on-duration domain of the RX UE.

The above proposal can also be applied to the SL DRX RTT timer operation. That is, the RX UE may start an SL DRX retransmission timer in the time domain of the last resource reserved through SCI by the TX UE (or the time when the last transmission is received or the time of PSFCH transmission for reception of the last transmission). The TX UE may also determine/consider/assume that the RX UE has started the SL DRX retransmission timer in the time domain of the last resource reserved through SCI by the TX UE (or the last transmission time).

Alternatively, for example, the RX UE may start an SL DRX retransmission timer in the time domain of the first resource reserved through SCI by the TX UE (or the time when the first transmission is received or the time of PSFCH transmission for reception of the first transmission). The TX UE may also determine/consider/assume that the RX UE has started the SL DRX retransmission timer in the time domain of the first resource reserved through SCI by the TX UE (or the first transmission time).

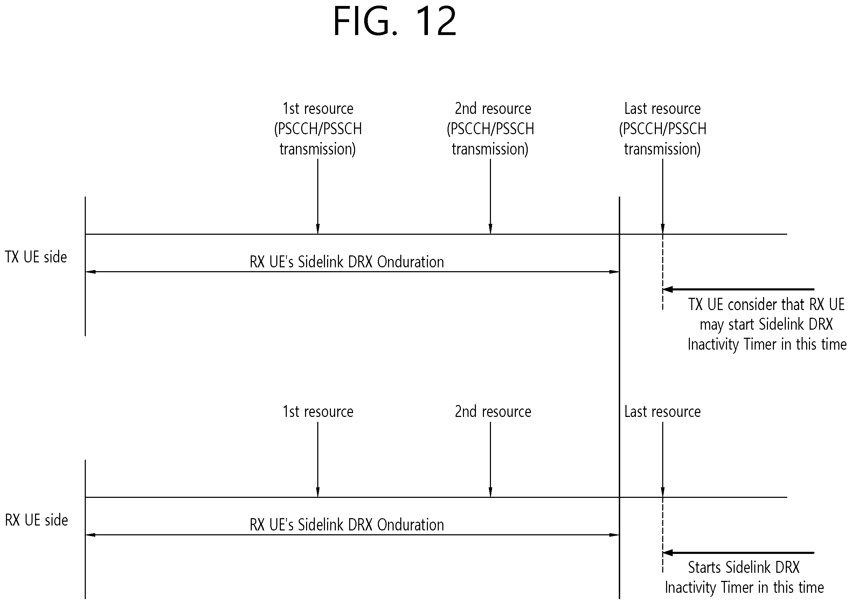

FIG. 12 shows an example of the start time of a timer, in order to solve the misalignment of the start time of timers between the TX UE and the RX UE, based on an embodiment of the present disclosure. The embodiment of FIG. 12 may be combined with various embodiments of the present disclosure.

FIG. 12 shows an embodiment for a case where the indicated last transmission resource is out of an SL DRX on-duration of the RX UE when the TX UE transmits SCI indicating resource(s) related to a new TB or a retransmission TB to the RX UE.

As in the embodiment of FIG. 12, if the time domain of the last resource reserved through SCI by the TX UE (or the time when the last transmission is received or the time of PSFCH transmission for reception of the last transmission) is out of the SL DRX on-duration domain of the RX UE, the RX UE may transition to a sleep mode if the SL DRX on-duration expires, and the RX UE may operate in a sleep mode until the time domain of the last transmission resource indicated through SCI by the TX UE. For example, by starting a HARQ RTT timer, the RX UE may operate in a sleep mode until the time domain of the last transmission resource indicated through SCI by the TX UE. In addition, if the RX UE reaches the time domain of the last transmission resource indicated through SCI by the TX UE, the RX UE may start an SL DRX inactivity timer by transitioning to an active mode. The TX UE may also determine/consider/assume that the RX UE has started the SL DRX inactivity timer in the time domain of the last resource reserved through SCI by the TX UE (or the last transmission time). Or, if the time domain of the last resource reserved through SCI by the TX UE (or the time when the last transmission is received or the time of PSFCH transmission for reception of the last transmission) is out of the SL DRX on-duration domain of the RX UE, the RX UE may start an SL DRX inactivity timer if the SL DRX on-duration expires, and the TX UE may also determine/consider/assume that the RX UE has started the SL DRX inactivity timer at the corresponding time.

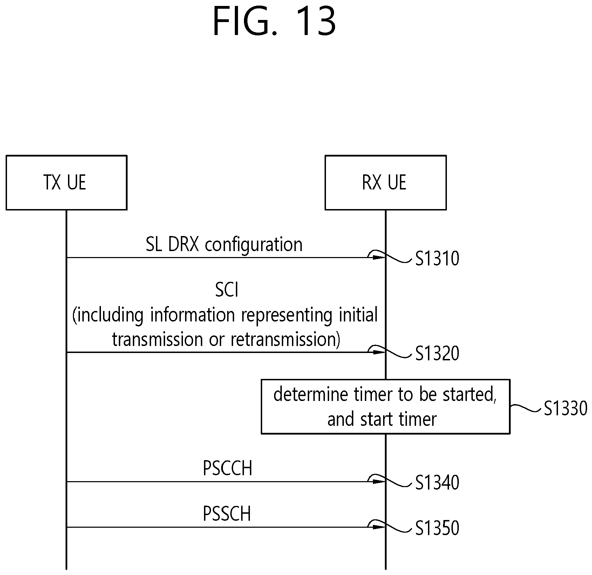

FIG. 13 shows a procedure for solving the misalignment of the start time of timers between the TX UE and the RX UE, based on an embodiment of the present disclosure. The embodiment of FIG. 13 may be combined with various embodiments of the present disclosure.

Referring to FIG. 13, in step S1310, the TX UE may transmit an SL DRX configuration to the RX UE. Alternatively, for example, an SL DRX configuration may be configured or pre-configured for the TX UE and/or the RX UE. For example, the SL DRX configuration may include at least one of information related to an SL DRX cycle, information related to an onduration timer, information related to an inactivity timer, information related to a retransmission timer, or information related to an HARQ RTT timer. For example, in the present disclosure, the SL DRX configuration may include at least one of the parameters described in Table 14.

[Table 14]

| |
| --- |
| SL drx-onDurationTimer: the duration at the beginning of a SL DRX Cycle; |
| SL drx-SlotOffset: the delay before starting the sl drx-onDurationTimer; |
| SL drx-InactivityTimer: the duration after the PSCCH occasion in which a PSCCH indicates a new SL transmission for the MAC entity; |
| SL drx-StartOffset: the subframe where the SL DRX cycle start; |
| SL drx-Cycle: the SL DRX cycle; |
| SL drx-HARQ-RTT-Timer (per HARQ process or per sidelink process): the minimum duration before an assignment for HARQ retransmission is expected by the MAC entity. |
| SL drx-RetransmissionTimer (per HARQ process or per sidelink process): the maximum duration until a retransmission is received |

For example, the SL DRX timer described in the present disclosure may be used for the following purposes.

[0114]   - SL DRX onduration timer: the duration in which the UE performing the SL DRX operation should basically operate in an active time in order to receive a PSCCH/PSSCH from other UE(s)

[0115]   - SL DRX inactivity timer: the duration extending the SL DRX onduration duration, which is the duration in which the UE performing the SL DRX operation should basically operate in the active time in order to receive the PSCCH/PSSCH from other UE(s). That is, the SL DRX onduration timer may be extended by the SL DRX inactivity timer duration. In addition, if the UE receives a new packet (e.g., new PSSCH transmission) from other UE(s), the UE may extend the SL DRX onduration timer by starting the SL DRX inactivity timer.

[0116]   - SL DRX HARQ RTT timer: the duration in which the UE performing the SL DRX operation operates in a sleep mode until receiving a retransmission packet (or PSSCH assignment) transmitted by other UE(s). That is, if the UE starts the SL DRX HARQ RTT timer, the UE may determine that other UE(s) will not transmit a sidelink retransmission packet to the UE until the SL DRX HARQ RTT timer expires, and the UE may operate in a sleep mode while the corresponding timer is running.

[0117]   - SL DRX retransmission timer: the timer which starts when the SL DRX HARQ RTT timer expires, and the duration in which the UE performing the SL DRX operation operates in an active time in order to receive a retransmission packet (or PSSCH assignment) transmitted by other UE(s). For the corresponding timer duration, the UE may receive or monitor a retransmission sidelink packet (or PSSCH assignment) transmitted by other UE(s).

In the present disclosure, the names of the timer (e.g., SL DRX on-duration timer, SL DRX inactivity timer, SL DRX HARQ RTT timer, SL DRX retransmission timer, etc.) is exemplary, and a timer performing the same/similar function based on the contents described in each timer may be considered as the same/similar timer regardless of the names of the timer.

In step S1320, the TX UE may indicate to the RX UE whether the current transmission (e.g., transmission resource indicated by SCI) of the TX UE is initial transmission or retransmission through SCI. For example, the TX UE may transmit SCI including information indicating initial transmission or information indicating retransmission to the RX UE.

In step S1330, the RX UE may determine a timer to be started based on the SCI. For example, if the RX UE checks the SCI transmitted by the TX UE and is instructed that the current transmission is retransmission, the RX UE may start an SL DRX retransmission timer (e.g., a timer operated by the RX UE to receive sidelink retransmission data retransmitted by the TX UE) or an SL DRX HARQ RTT timer, but the RX UE does not start an SL DRX inactivity timer (e.g., a timer operated by the RX UE to receive SL initial transmission data transmitted by the TX UE). For example, if the RX UE starts the SL DRX HARQ RTT timer, the RX UE may determine/deem/assume that the TX UE will transmit an SL retransmission packet after the SL DRX HARQ RTT timer expires. Therefore, while the SL DRX HARQ RTT timer is running, the RX UE may operate in a sleep mode. In addition, after the expiration of the SL DRX HARQ RTT timer, the RX UE may start an SL DRX retransmission timer to transition to an active mode, and the RX UE may receive SL retransmission data transmitted by the TX UE. For example, if the RX UE checks the SCI transmitted by the TX UE and is instructed that the current transmission is initial transmission, the RX UE may start an SL DRX inactivity timer (e.g., a timer operated by the RX UE to receive SL initial transmission data transmitted by the TX UE).

Furthermore, the RX UE needs to determine the start time of an SL DRX inactivity timer or an SL DRX retransmission timer (or SL DRX HARQ RTT timer).

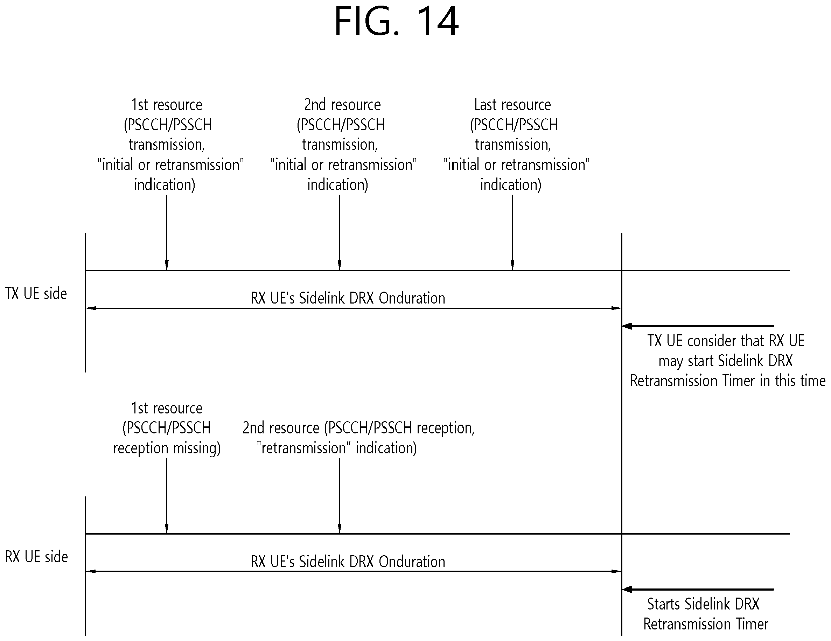

FIG. 14 shows an example of the start time of a timer, based on an embodiment of the present disclosure. The embodiment of FIG. 14 may be combined with various embodiments of the present disclosure.

Referring to FIG. 14, a time when an SL DRX on-duration expires may be considered as a reference time, and the UE may start an SL DRX inactivity timer or an SL DRX retransmission timer (or an SL DRX HARQ RTT timer). If the RX UE successfully receives a PSCCH/PSSCH transmitted by the TX UE and the TX UE indicates to the RX UE that the current transmission is SL initial transmission through SCI, the RX UE may start the SL DRX inactivity timer at the expiration of the SL DRX on-duration.

In the embodiment of FIG. 14, it is assumed that the RX UE successfully receives a PSCCH/PSSCH transmitted by the TX UE and the TX UE indicates to the RX UE that the current transmission is SL retransmission through SCI. Accordingly, the RX UE may start an SL DRX retransmission timer (or an SL DRX RTT timer) at the expiration of the SL DRX onduration. In addition, the TX UE may determine/consider/assume that the RX UE has started the SL DRX retransmission timer (or the SL DRX RTT timer) at the expiration of the SL DRX on-duration, and the TX UE may perform the SL DRX operation. Specifically, for example, by synchronizing the start time and expiration time of SL DRX timers between the TX UE and the RX UE, the TX UE and the RX UE may perform the SL DRX operation.

Referring back to FIG. 13, in step S1340, the TX UE may transmit a PSCCH to the RX UE based on the timer initiated by the RX UE.

In step S1350, the TX UE may transmit a PSSCH to the RX UE based on the timer initiated by the RX UE.

The on-duration term mentioned in the proposal of the present disclosure can be extended to and interpreted as an active time duration (e.g., the duration operating in a wakeup state (e.g., the RF module is ON) to receive/transmit a radio signal). In addition, whether or not the (some) proposed method/rule of the present disclosure is applied and/or related parameter(s) (e.g., threshold value(s)) may be configured specifically (or differently or independently), based on a resource pool, a congestion level, a service priority (and/or type), a requirement (e.g., latency, reliability), a traffic type (e.g., (a)periodic generation), an SL transmission resource allocation mode (e.g., mode 1, mode 2), etc. The name of the SL DRX inactivity timer is exemplary, and a similar name can be used if it refers to a timer related to DRX inactivity in sidelink. The name of the SL DRX HARQ RTT timer is exemplary, and a similar name can be used if it refers to a timer related to HARQ RTT in sidelink. The name of the SL DRX retransmission timer is exemplary, and a similar name can be used if it refers to a timer related to retransmission in sidelink.

The proposals of the present disclosure can be applied only to an SL HARQ Feedback Enabled mode. The proposals of the present disclosure can be applied only to an SL HARQ Feedback Disabled mode. The proposals of the present disclosure can be equally applied to both the SL HARQ Feedback Enabled mode and the SL HARQ Feedback Disabled mode.

The SL DRX inactivity timer operation of the TX UE and the RX UE proposed in the present disclosure can be equally applied to the SL DRX RTT timer operation of the TX UE and the RX UE.

In addition, the operation proposed in the present disclosure can be applicable to both the NR V2X resource allocation mode 1 and the resource allocation mode 2 operation.

Based on various embodiments of the present disclosure, a method for solving the misalignment of the start time of SL DRX inactivity timers and SL DRX RTT timers between the TX UE and the RX UE and a device supporting the same are proposed. Through the proposed method, an effect of synchronizing the SL DRX operation (e.g., synchronization to when entering sleep mode, synchronization to transition to active time) between the TX UE and the RX UE can be obtained.

The proposal of the present disclosure can be applied/extended to/as a method of solving a problem in which loss occurs due to interruption which occurs during Uu BWP switching. In addition, in the case of a plurality of SL BWPs being supported for the UE, the proposal of the present disclosure can be applied/extended to/as a method of solving a problem in which loss occurs due to interruption which occurs during SL BWP switching.

The proposal of the present disclosure can be applied/extended to/as UE-pair specific SL DRX configuration(s), UE-pair specific SL DRX pattern(s) or parameter(s) (e.g., timer) included in UE-pair specific SL DRX configuration(s), as well as default/common SL DRX configuration(s), default/common SL DRX pattern(s), or parameter(s) (e.g., timer) included in default/common SL DRX configuration(s). In addition, the on-duration mentioned in the proposal of the present disclosure may be extended to or interpreted as an active time (e.g., time to wake-up state (e.g., RF module turned on) to receive/transmit radio signal(s)) duration, and the off-duration may be extended to or interpreted as a sleep time (e.g., time to sleep in sleep mode state (e.g., RF module turned off) to save power) duration. It does not mean that the TX UE is obligated to operate in the sleep mode in the sleep time duration. If necessary, the TX UE may be allowed to operate in an active time for a while for a sensing operation and/or a transmission operation, even if it is a sleep time.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2).

For example, whether or not the proposed rule of the present disclosure is applied and/or related parameter configuration value(s) may be configured (differently or independently) for each resource pool. For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or pre-emption-based resource reselection. For example, whether or not the proposed rule of the present disclosure is applied and/or related parameter configuration value(s) may be configured specifically (or differently or independently) for re-evaluation or re-evaluation-based resource reselection. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) for the case of performing SL DRX. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation.

The certain time mentioned in the proposal of the present disclosure may refer to a time during which a UE operates in an active time for a pre-defined time in order to receive sidelink signal(s) or sidelink data from a counterpart UE. The certain time mentioned in the proposal of the present disclosure may refer to a time during which a UE operates in an active time as long as a specific timer (e.g., sidelink DRX retransmission timer, sidelink DRX inactivity timer, or timer to ensure that an RX UE can operate in an active time in a DRX operation of the RX UE) is running in order to receive sidelink signal(s) or sidelink data from a counterpart UE. In addition, the proposal and whether or not the proposal rule of the present disclosure is applied (and/or related parameter configuration value(s)) may also be applied to a mm Wave SL operation.

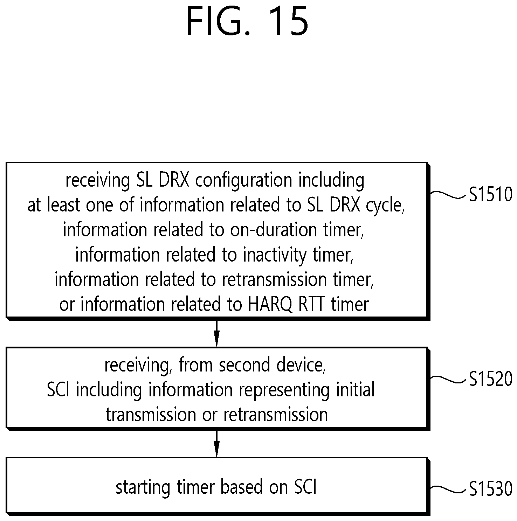

FIG. 15 shows a method for performing wireless communication by a first device, based on an embodiment of the present disclosure. The embodiment of FIG. 15 may be combined with various embodiments of the present disclosure.

Referring to FIG. 15, in step S1510, the first device may receive a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer. In step S1520, the first device may receive, from a second device, sidelink control information (SCI) including information representing initial transmission or retransmission. In step S1530, the first device may start a timer based on the SCI. For example, based on that the information representing the initial transmission is included in the SCI, the inactivity timer may be started. For example, based on that the information representing the retransmission is included in the SCI, the retransmission timer or the HARQ RTT timer may be started. For example, a time during which at least one of the on-duration timer, the inactivity timer, or the retransmission timer is running may be an active time.

For example, the timer may be started at an expiration time of the on-duration timer, and the timer may be at least one of the inactivity timer, the retransmission timer, or the HARQ RTT timer.

For example, based on that the SCI received based on a first SL resource includes information related to a second SL resource, a time domain before the second SL resource may not be an active time.

For example, based on that the SCI received based on a first SL resource includes information related to a second SL resource, the first device may operate in a sleep mode in a time domain before the second SL resource by starting the HARQ RTT timer. For example, a value of the HARQ RTT timer may be determined based on a time interval between the first SL resource and the second SL resource.

For example, the inactivity timer may be started at an expiration time of the onduration timer.

For example, the inactivity timer may be started at a start time of the on-duration timer.

For example, based on the SCI including information related to a plurality of SL resources, the inactivity timer or the retransmission timer may be started after a time domain of a last SL resource among the plurality of SL resources. For example, the plurality of SL resources may be included in the on-duration of the first device.

For example, based on the SCI including information related to a plurality of SL resources, the inactivity timer or the retransmission timer may be started after a time domain of a PSFCH resource related to a last SL resource among the plurality of SL resources.

For example, based on the SCI including information related to a plurality of SL resources, the inactivity timer or the retransmission timer may be started after a time domain of a first occurring SL resource among the plurality of SL resources.

For example, based on the SCI including information related to a plurality of SL resources, the inactivity timer or the retransmission timer may be started after a time domain of a PSFCH resource related to a first occurring SL resource among the plurality of SL resources.

For example, a time during which the HARQ RTT timer is running may not be the active time.

The proposed method can be applied to the device(s) based on various embodiments of the present disclosure. First, the processor 102 of the first device 100 may control the transceiver 106 to receive a sidelink (SL) discontinuous reception (DRX) configuration including at least one of information related to an SL DRX cycle, information related to an onduration timer, information related to an inactivity timer, information related to a retransmission timer, or information related to a hybrid automatic repeat request (HARQ) round trip time (RTT) timer. In addition, the processor 102 of the first device 100 may control the transceiver 106 to receive, from a second device, sidelink control information (SCI) including information representing initial transmission or retransmission. In addition, the processor 102 of the first device 100 may start a timer based on the SCI. For example, based on that the information representing the initial transmission is included in the SCI, the inactivity timer may be started. For example, based on that the information representing the retransmission is included in the SCI, the retransmission timer or the HARQ RTT timer may be started. For example, a time during which at least one of the on-duration timer, the inactivity timer, or the retransmission timer is running may be an active time.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers.

For example, the one or more processors may execute the instructions to: receive a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; receive, from a second device, sidelink control information (SCI) including information representing initial transmission or retransmission; and start a timer based on the SCI. For example, based on that the information representing the initial transmission is included in the SCI, the inactivity timer may be started. For example, based on that the information representing the retransmission is included in the SCI, the retransmission timer or the HARQ RTT timer may be started. For example, a time during which at least one of the on-duration timer, the inactivity timer, or the retransmission timer is running may be an active time.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: receive a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; receive, from a second UE, sidelink control information (SCI) including information representing initial transmission or retransmission; and start a timer based on the SCI. For example, based on that the information representing the initial transmission is included in the SCI, the inactivity timer may be started. For example, based on that the information representing the retransmission is included in the SCI, the retransmission timer or the HARQ RTT timer may be started. For example, a time during which at least one of the on-duration timer, the inactivity timer, or the retransmission timer is running may be an active time.

Based on an embodiment of the present disclosure, a non-transitory computer readable storage medium storing instructions may be provided. For example, the instructions, when executed, may cause a first device to: receive a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; receive, from a second device, sidelink control information (SCI) including information representing initial transmission or retransmission; and start a timer based on the SCI. For example, based on that the information representing the initial transmission is included in the SCI, the inactivity timer may be started. For example, based on that the information representing the retransmission is included in the SCI, the retransmission timer or the HARQ RTT timer may be started. For example, a time during which at least one of the on-duration timer, the inactivity timer, or the retransmission timer is running may be an active time.

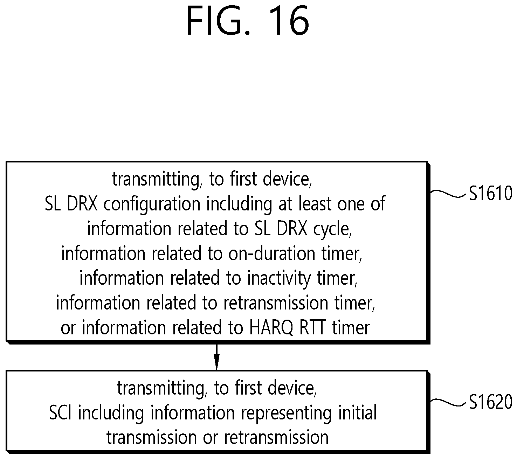

FIG. 16 shows a method for performing wireless communication by a second device, based on an embodiment of the present disclosure. The embodiment of FIG. 16 may be combined with various embodiments of the present disclosure.

Referring to FIG. 16, in step S1610, the second device may transmit, to a first device, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer. In step S1620, the second device may transmit, to the first device, sidelink control information (SCI) including information representing initial transmission or retransmission. For example, based on that the information representing the initial transmission is included in the SCI, the inactivity timer may be started by the first device. For example, based on that the information representing the retransmission is included in the SCI, the retransmission timer or the HARQ RTT timer may be started by the first device. For example, a time during which at least one of the on-duration timer, the inactivity timer, or the retransmission timer is running may be an active time.

The proposed method can be applied to the device(s) based on various embodiments of the present disclosure. First, the processor 202 of the second device 200 may control the transceiver 206 to transmit, to a first device, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer. In addition, the processor 202 of the second device 200 may control the transceiver 206 to transmit, to the first device, sidelink control information (SCI) including information representing initial transmission or retransmission. For example, based on that the information representing the initial transmission is included in the SCI, the inactivity timer may be started by the first device. For example, based on that the information representing the retransmission is included in the SCI, the retransmission timer or the HARQ RTT timer may be started by the first device. For example, a time during which at least one of the on-duration timer, the inactivity timer, or the retransmission timer is running may be an active time.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: transmit, to a first device, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; and transmit, to the first device, sidelink control information (SCI) including information representing initial transmission or retransmission. For example, based on that the information representing the initial transmission is included in the SCI, the inactivity timer may be started by the first device. For example, based on that the information representing the retransmission is included in the SCI, the retransmission timer or the HARQ RTT timer may be started by the first device. For example, a time during which at least one of the on-duration timer, the inactivity timer, or the retransmission timer is running may be an active time.

Based on an embodiment of the present disclosure, an apparatus adapted to control a second user equipment (UE) may be provided. For example, the apparatus may comprise: one or more processors; and one or more memories operably connected to the one or more processors and storing instructions. For example, the one or more processors may execute the instructions to: transmit, to a first UE, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; and transmit, to the first UE, sidelink control information (SCI) including information representing initial transmission or retransmission. For example, based on that the information representing the initial transmission is included in the SCI, the inactivity timer may be started by the first UE. For example, based on that the information representing the retransmission is included in the SCI, the retransmission timer or the HARQ RTT timer may be started by the first UE. For example, a time during which at least one of the on-duration timer, the inactivity timer, or the retransmission timer is running may be an active time.

Based on an embodiment of the present disclosure, a non-transitory computer readable storage medium storing instructions may be provided. For example, the instructions, when executed, may cause a second device to: transmit, to a first device, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; and transmit, to the first device, sidelink control information (SCI) including information representing initial transmission or retransmission. For example, based on that the information representing the initial transmission is included in the SCI, the inactivity timer may be started by the first device. For example, based on that the information representing the retransmission is included in the SCI, the retransmission timer or the HARQ RTT timer may be started by the first device. For example, a time during which at least one of the on-duration timer, the inactivity timer, or the retransmission timer is running may be an active time.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

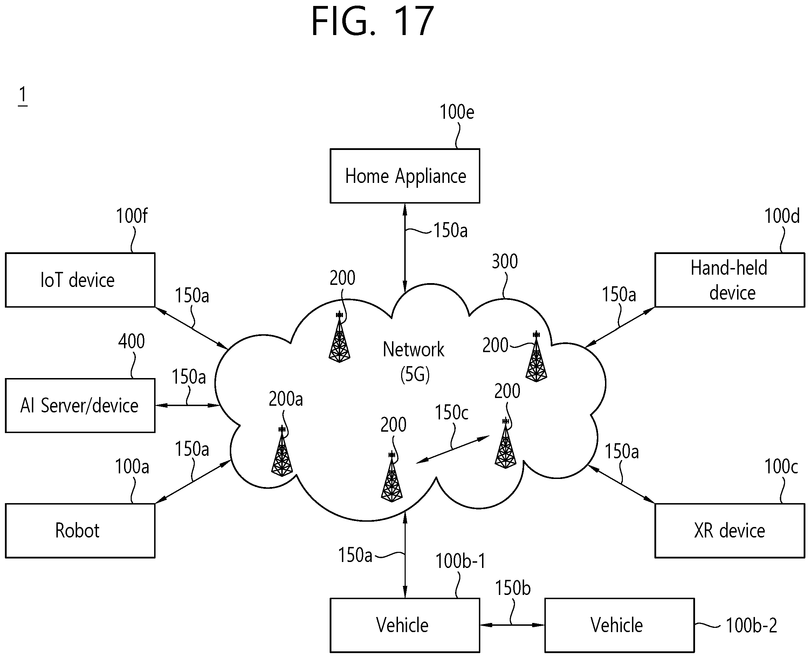

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100c, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

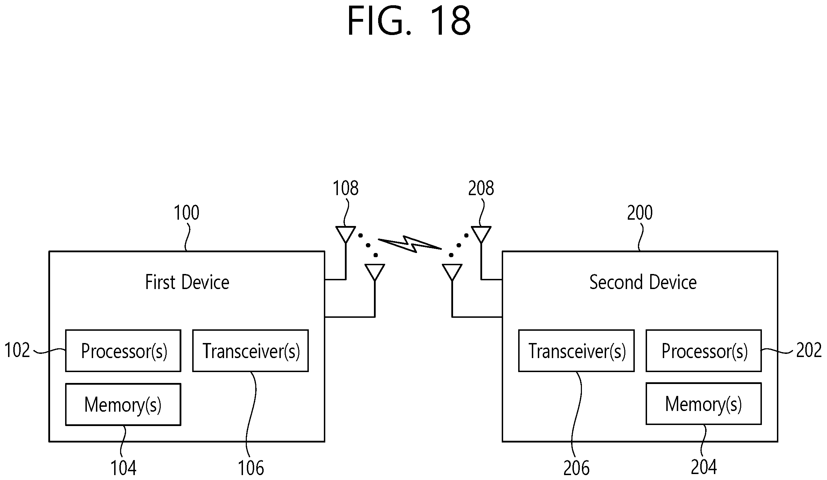

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

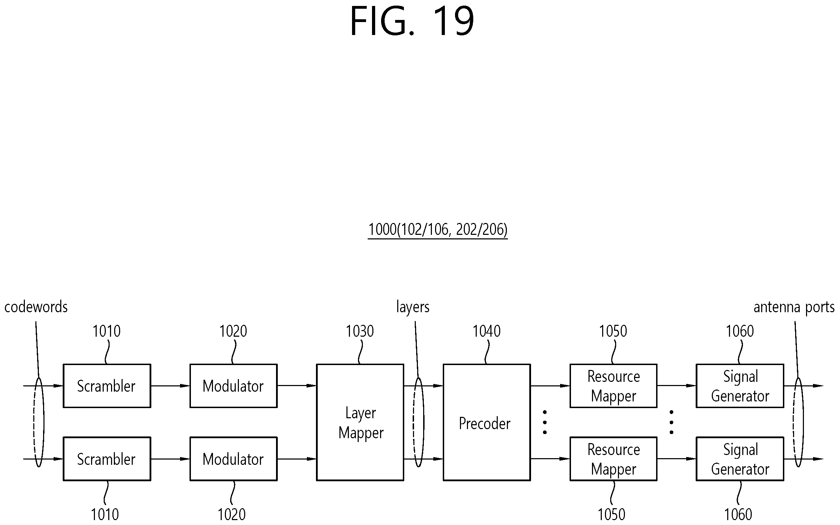

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

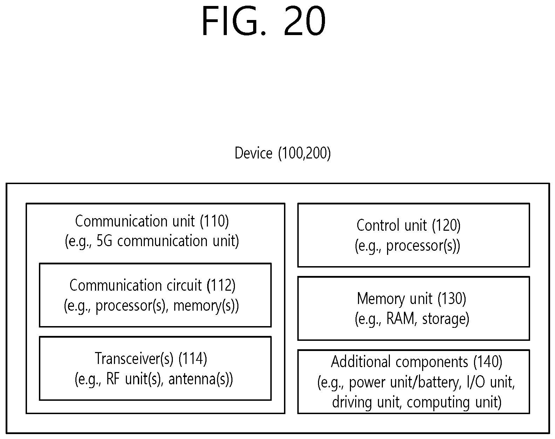

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

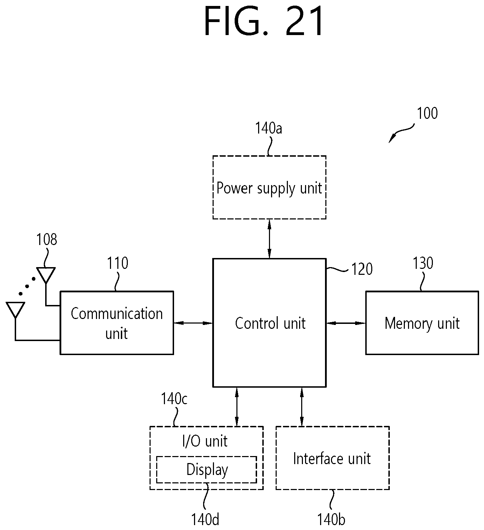

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

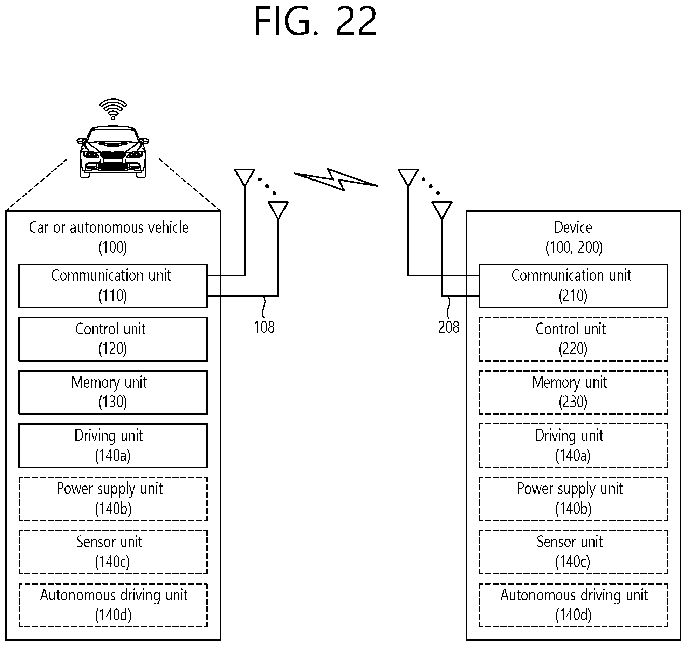

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

   receiving a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer;
   receiving, from a second device, sidelink control information (SCI) including information representing initial transmission or retransmission; and
   starting a timer based on the SCI,
   wherein, based on that the information representing the initial transmission is included in the SCI, the inactivity timer is started,
   wherein, based on that the information representing the retransmission is included in the SCI, the retransmission timer or the HARQ RTT timer is started, and
   wherein a time during which at least one of the on-duration timer, the inactivity timer, or the retransmission timer is running is an active time.

**2.** The method of claim 1, wherein the timer is started at an expiration time of the on-duration timer, and wherein the timer is at least one of the inactivity timer, the retransmission timer, or the HARQ RTT timer.

**3.** The method of claim 1, wherein, based on that the SCI received based on a first SL resource includes information related to a second SL resource, a time domain before the second SL resource is not an active time.

**4.** The method of claim 1, wherein, based on that the SCI received based on a first SL resource includes information related to a second SL resource, the first device operates in a sleep mode in a time domain before the second SL resource by starting the HARQ RTT timer.

**5.** The method of claim 4, wherein a value of the HARQ RTT timer is determined based on a time interval between the first SL resource and the second SL resource.

**6.** The method of claim 1, wherein the inactivity timer is started at an expiration time of the on-duration timer.

**7.** The method of claim 1, wherein the inactivity timer is started at a start time of the on-duration timer.

**8.** The method of claim 1, wherein, based on the SCI including information related to a plurality of SL resources, the inactivity timer or the retransmission timer is started after a time domain of a last SL resource among the plurality of SL resources.

**9.** The method of claim 8, wherein the plurality of SL resources are included in the on-duration of the first device.

**10.** The method of claim 1, wherein, based on the SCI including information related to a plurality of SL resources, the inactivity timer or the retransmission timer is started after a time domain of a PSFCH resource related to a last SL resource among the plurality of SL resources.

**11.** The method of claim 1, wherein, based on the SCI including information related to a plurality of SL resources, the inactivity timer or the retransmission timer is started after a time domain of a first occurring SL resource among the plurality of SL resources.

**12.** The method of claim 1, wherein, based on the SCI including information related to a plurality of SL resources, the inactivity timer or the retransmission timer is started after a time domain of a PSFCH resource related to a first occurring SL resource among the plurality of SL resources.

**13.** The method of claim 1, wherein a time during which the HARQ RTT timer is running is not the active time.

**14.** A first device adapted to perform wireless communication, the first device comprising:

> one or more memories storing instructions;
> one or more transceivers; and
> one or more processors connected to the one or more memories and the one or more transceivers, wherein the one or more processors execute the instructions to:

>> receive a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer;
>> receive, from a second device, sidelink control information (SCI) including information representing initial transmission or retransmission; and
>> start a timer based on the SCI,
>> wherein, based on that the information representing the initial transmission is included in the SCI, the inactivity timer is started,
>> wherein, based on that the information representing the retransmission is included in the SCI, the retransmission timer or the HARQ RTT timer is started, and
>> wherein a time during which at least one of the on-duration timer, the inactivity timer, or the retransmission timer is running is an active time.

**15.** An apparatus adapted to control a first user equipment (UE), the apparatus comprising:

one or more processors; and
one or more memories operably connected to the one or more processors and storing instructions, wherein the one or more processors execute the instructions to:

receive a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer;
receive, from a second UE, sidelink control information (SCI) including information representing initial transmission or retransmission; and
start a timer based on the SCI,
wherein, based on that the information representing the initial transmission is included in the SCI, the inactivity timer is started,
wherein, based on that the information representing the retransmission is included in the SCI, the retransmission timer or the HARQ RTT timer is started, and
wherein a time during which at least one of the on-duration timer, the inactivity timer, or the retransmission timer is running is an active time.

**16.** A non-transitory computer-readable storage medium storing instructions that, when executed, cause a first device to:

receive a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer;
receive, from a second device, sidelink control information (SCI) including information representing initial transmission or retransmission; and
start a timer based on the SCI,
wherein, based on that the information representing the initial transmission is included in the SCI, the inactivity timer is started,
wherein, based on that the information representing the retransmission is included in the SCI, the retransmission timer or the HARQ RTT timer is started, and
wherein a time during which at least one of the on-duration timer, the inactivity timer, or the retransmission timer is running is an active time.

**17.** A method for performing wireless communication by a second device, the method comprising:

transmitting, to a first device, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; and
transmitting, to the first device, sidelink control information (SCI) including information representing initial transmission or retransmission,
wherein, based on that the information representing the initial transmission is included in the SCI, the inactivity timer is started by the first device,
wherein, based on that the information representing the retransmission is included in the SCI, the retransmission timer or the HARQ RTT timer is started by the first device, and
wherein a time during which at least one of the on-duration timer, the inactivity timer, or the retransmission timer is running is an active time.

**18.** A second device adapted to perform wireless communication, the second device comprising:

one or more memories storing instructions;
one or more transceivers; and
one or more processors connected to the one or more memories and the one or more transceivers, wherein the one or more processors execute the instructions to:

transmit, to a first device, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; and

transmit, to the first device, sidelink control information (SCI) including information representing initial transmission or retransmission,

wherein, based on that the information representing the initial transmission is included in the SCI, the inactivity timer is started by the first device,

wherein, based on that the information representing the retransmission is included in the SCI, the retransmission timer or the HARQ RTT timer is started by the first device, and

wherein a time during which at least one of the on-duration timer, the inactivity timer, or the retransmission timer is running is an active time.

19. An apparatus adapted to control a second user equipment (UE), the apparatus comprising:

one or more processors; and
one or more memories operably connected to the one or more processors and storing instructions, wherein the one or more processors execute the instructions to:

transmit, to a first UE, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; and

transmit, to the first UE, sidelink control information (SCI) including information representing initial transmission or retransmission,

wherein, based on that the information representing the initial transmission is included in the SCI, the inactivity timer is started by the first UE,

wherein, based on that the information representing the retransmission is included in the SCI, the retransmission timer or the HARQ RTT timer is started by the first UE, and

wherein a time during which at least one of the on-duration timer, the inactivity timer, or the retransmission timer is running is an active time.

20. A non-transitory computer-readable storage medium storing instructions that, when executed, cause a second device to:

transmit, to a first device, a sidelink (SL) discontinuous reception (DRX) configuration including at least one of information related to an SL DRX cycle, information related to an on-duration timer, information related to an inactivity timer, information related to a retransmission timer, or information related to a hybrid automatic repeat request (HARQ) round trip time (RTT) timer; and

transmit, to the first device, sidelink control information (SCI) including information representing initial transmission or retransmission,

wherein, based on that the information representing the initial transmission is included in the SCI, the inactivity timer is started by the first device,

wherein, based on that the information representing the retransmission is included in the SCI, the retransmission timer or the HARQ RTT timer is started by the first device, and

wherein a time during which at least one of the on-duration timer, the inactivity timer, or the retransmission timer is running is an active time.

# FIG. 1

# FIG. 2

# FIG. 3

|   | One Frame (10ms) |   |
|---|---|---|

|   | Half-Frame (5ms) | Half-Frame (5ms) |   |
|---|---|---|---|

Subframe 0 (1ms) ··· Subframe 4 (1ms) | Subframe 5 (1ms) ··· Subframe 9 (1ms)

Subframe (1ms)

**15KHz**
| Slot 0 (14symbols) |
|---|

1ms

**30KHz**
| Slot 0 (14symbols) | Slot 1 |
|---|---|

500us

**60KHz**
| Slot 0 (14symbols) | Slot 1 | Slot 2 | Slot 3 |
|---|---|---|---|

250us

**120KHz**
| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 4

Resource grid

A carrier
(up to 3300 subcarriers,
i.e., 275 RBs)

A BWP

1RB=12 subcarriers

1subcarrier

1 RE

1 symbol

k=0

l=0

# FIG. 5

| PRB N3 |
| --- |

$N^{size}_{BWP, 2}$

| PRB 1 |
| --- |
| PRB 0 |

| PRB N2 |
| --- |

$N^{size}_{BWP, 1}$

| PRB 1 |
| --- |
| PRB 0 |

| PRB N1 |
| --- |

$N^{size}_{BWP, 0}$

| PRB 1 |
| --- |
| PRB 0 |

$N^{start}_{BWP, 2}$

$N^{start}_{BWP, 1}$

$N^{start}_{BWP, 0}$

Carrier Bandwidth

///CRB 0///

Freq.

Time

PRB 0 (Point A) in reference resource block

# FIG. 6

| BS | first UE | second UE |
|---|---|---|

resource
scheduling

S600

PSCCH →  S610

PSSCH →  S620

PSFCH ← ---- S630

PUCCH/PUSCH ← ----  S640

(a)

| first UE | second UE |
|---|---|

PSCCH →  S610

PSSCH →  S620

PSFCH ← ---- S630

(b)

# FIG. 7

(a)　　　　　(b)　　　　　(c)

●: TX UE
⊘: RX UE

# FIG. 8

# FIG. 9

1st resource (PSCCH/PSSCH transmission)

2nd resource (PSCCH/PSSCH transmission)

Last resource (PSCCH/PSSCH transmission)

TX UE side

RX UE's Sidelink DRX Onduration

Sidelink DRX Inactivity Timer

PSCCH/PSSCH reception

RX UE side

RX UE's Sidelink DRX Onduration

Misunderstanding of Sidelink DRX Inactivity Timer between TX UE and RX UE

Sidelink DRX Inactivity Timer

EP 4 236 556 A1

# FIG. 10

EP 4 236 556 A1

FIG. 11

# FIG. 12

# FIG. 13

# FIG. 14

1st resource
(PSCCH/PSSCH
transmission,
"initial or retransmission"
indication)

2nd resource
(PSCCH/PSSCH
transmission,
"initial or retransmission"
indication)

Last resource
(PSCCH/PSSCH
transmission,
"initial or retransmission"
indication)

TX UE side

RX UE's Sidelink DRX Onduration

TX UE consider that RX UE
may start Sidelink DRX
Retransmission Timer in this time

1st resource
(PSCCH/PSSCH
reception missing)

2nd resource (PSCCH/PSSCH reception,
"retransmission" indication)

RX UE side

RX UE's Sidelink DRX Onduration

Starts Sidelink DRX
Retransmission Timer

EP 4 236 556 A1

# FIG. 15

| receiving SL DRX configuration including at least one of information related to SL DRX cycle, information related to on-duration timer, information related to inactivity timer, information related to retransmission timer, or information related to HARQ RTT timer | S1510 |

| receiving, from second device, SCI including information representing initial transmission or retransmission | S1520 |

| starting timer based on SCI | S1530 |

# FIG. 16

transmitting, to first device,
SL DRX configuration including at least one of
information related to SL DRX cycle,
information related to on-duration timer,
information related to inactivity timer,
information related to retransmission timer,
or information related to HARQ RTT timer    ~S1610

transmitting, to first device,
SCI including information representing initial
transmission or retransmission    ~S1620

# FIG. 17

1

# FIG. 18

# FIG. 19

1000(102/106, 202/206)

# FIG. 20

Device (100,200)

| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 21

# FIG. 22

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

208

## INTERNATIONAL SEARCH REPORT

International application No.

**PCT/KR2021/014602**

### A. CLASSIFICATION OF SUBJECT MATTER

**H04W 72/12**(2009.01)i; **H04W 72/04**(2009.01)i; **H04W 72/02**(2009.01)i; **H04W 76/28**(2018.01)i; **H04W 4/40**(2018.01)i; **H04W 92/18**(2009.01)i

According to International Patent Classification (IPC) or to both national classification and IPC

### B. FIELDS SEARCHED

Minimum documentation searched (classification system followed by classification symbols)

H04W 72/12(2009.01); H04L 1/18(2006.01); H04W 52/02(2009.01); H04W 56/00(2009.01); H04W 68/08(2009.01); H04W 76/14(2018.01); H04W 76/23(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL DRX cycle, onduration timer, inactivity timer, HARQ RTT timer, retransmission timer, 초기 전송(initial transmission), 재전송(retransmission), SCI, 활성 시간(active time), 슬립 모드(sleep mode), 만료 (expire), 개시(start)

### C. DOCUMENTS CONSIDERED TO BE RELEVANT

| Category* | Citation of document, with indication, where appropriate, of the relevant passages | Relevant to claim No. |
|---|---|---|
| Y | CN 111556590 A (CHINA ACADEMY OF INFORMATION AND COMMUNICATIONS TECHNOLOGY) 18 August 2020 (2020-08-18) See paragraphs [0052] and [0061]; and claims 1 and 3. | 1-2,6-7,13-20 |
| A | | 3-5,8-12 |
| Y | KR 10-2019-0039101 A (SONY CORPORATION) 10 April 2019 (2019-04-10) See paragraphs [0027]-[0028]; and figure 4. | 1-2,6-7,13-20 |
| Y | KR 10-2016-0056877 A (LG ELECTRONICS INC.) 20 May 2016 (2016-05-20) See paragraph [0062]; and figure 8. | 2,6-7 |
| Y | US 2019-0158229 A1 (FG INNOVATION IP COMPANY LIMITED) 23 May 2019 (2019-05-23) See paragraphs [0126]-[0145]; and figure 6A. | 13 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 January 2022** | **10 January 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/014602** |

**C.    DOCUMENTS CONSIDERED TO BE RELEVANT**

| Category* | Citation of document, with indication, where appropriate, of the relevant passages | Relevant to claim No. |
|---|---|---|
| A | EP 3499975 A1 (ZTE CORPORATION) 19 June 2019 (2019-06-19) See paragraphs [0156]-[0302]; and figure 10. | 1-20 |

Form PCT/ISA/210 (second sheet) (July 2019)

INTERNATIONAL SEARCH REPORT
Information on patent family members

International application No.

**PCT/KR2021/014602**

| Patent document cited in search report | | | Publication date (day/month/year) | Patent family member(s) | | | Publication date (day/month/year) |
|---|---|---|---|---|---|---|---|
| CN | 111556590 | A | 18 August 2020 | None | | | |
| KR | 10-2019-0039101 | A | 10 April 2019 | CN | 108307486 | A | 20 July 2018 |
| | | | | CN | 109196939 | A | 11 January 2019 |
| | | | | EP | 3500028 | A1 | 19 June 2019 |
| | | | | EP | 3500028 | B1 | 24 March 2021 |
| | | | | JP | 2019-525607 | A | 05 September 2019 |
| | | | | US | 10708861 | B2 | 07 July 2020 |
| | | | | US | 2019-0174411 | A1 | 06 June 2019 |
| | | | | US | 2020-0296668 | A1 | 17 September 2020 |
| | | | | WO | 2018-028416 | A1 | 15 February 2018 |
| KR | 10-2016-0056877 | A | 20 May 2016 | US | 2016-0219443 | A1 | 28 July 2016 |
| | | | | US | 9949145 | B2 | 17 April 2018 |
| | | | | WO | 2015-037956 | A1 | 19 March 2015 |
| US | 2019-0158229 | A1 | 23 May 2019 | CN | 111345103 | A | 26 June 2020 |
| | | | | EP | 3714655 | A1 | 30 September 2020 |
| | | | | EP | 3714655 | A4 | 11 August 2021 |
| | | | | JP | 2021-503856 | A | 12 February 2021 |
| | | | | KR | 10-2020-0071764 | A | 19 June 2020 |
| | | | | TW | 201927057 | A | 01 July 2019 |
| | | | | TW | I728281 | B | 21 May 2021 |
| | | | | US | 11115156 | B2 | 07 September 2021 |
| | | | | US | 2021-0328726 | A1 | 21 October 2021 |
| | | | | WO | 2019-101146 | A1 | 31 May 2019 |
| EP | 3499975 | A1 | 19 June 2019 | CN | 108307489 | A | 20 July 2018 |
| | | | | EP | 3499975 | A4 | 19 August 2020 |
| | | | | WO | 2018-028279 | A1 | 15 February 2018 |